(19) Europäisches Patentamt

European Patent Office

Office européen des brevets

(11) Veröffentlichungsnummer: **0 313 790 B1**

(12) **EUROPÄISCHE PATENTSCHRIFT**

(45) Veröffentlichungstag der Patentschrift: **27.11.91**

(51) Int. Cl.⁵: **G01M 3/22**

(21) Anmeldenummer: **88115166.6**

(22) Anmeldetag: **16.09.88**

(54) **Insbesondere auf Flüssigkeiten reagierende Lecküberwachungs- und Prüfeinrichtung.**

(30) Priorität: **26.10.87 DE 3736177**

(43) Veröffentlichungstag der Anmeldung:
**03.05.89 Patentblatt 89/18**

(45) Bekanntmachung des Hinweises auf die
Patenterteilung:
**27.11.91 Patentblatt 91/48**

(84) Benannte Vertragsstaaten:
**BE DE FR GB IT NL**

(56) Entgegenhaltungen:
**DE-A- 3 321 256**
**US-A- 4 320 654**

**PATENT ABSTRACTS OF JAPAN, unexamined applications, Sektion P, Band 10, Nr. 84,
3. April 1986 THE PATENT OFFICE JAPANESE
GOVERNMENT Seite 25 P 442**

(73) Patentinhaber: **Dietzel, Karl, Dr.**
**Friedensstrasse 215**
**W-4150 Krefeld 11(DE)**

(72) Erfinder: **Dietzel, Karl, Dr.**
**Friedensstrasse 215**
**W-4150 Krefeld 11(DE)**

(74) Vertreter: **Rehders, Jochen, Dipl.-Ing.**
**Stresemannstrasse 28**
**W-4000 Düsseldorf 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Lecküberwachungs- und Prüfeinrichtung der im Oberbegriff des Hauptanspruches genannten Art.

Es ist eine Lecküberwachungs- und Prüfeinrichtung bekannt, (Einrichtung der Firma Gore & Co. GmbH, DE-8835 Pleinfeld), bei der ein Sensorkabel Anwendung findet, das aus einem elektrisch leitenden Innenleiter, einem diesen umschließenden Mantel in Form eines mikroporösen Dielektrikums, einem diesen umgebenden, zweiten elektrischen Leiter umschlossen und letztlich aus einem Nylongeflecht besteht. Die Einrichtung baut auf der Änderung der Dielektrizitätskonstanten des mikroporösen Materials an der Leckstelle auf. - Durch die DE-A-33 21 256 ist eine Leckdetektionseinrichtung für den Beton-Druckbehälter eines gasgekühlten Kernreaktors bekannt, bei der an den Kühlrohren der Behälterwand gasdurchlässige, biegsame Stränge angeordnet sind, die in gasundurchlässige Anschlußleitungen münden.

Aus Patent Abstracts of Japan der JP-A-60-219533 ist eine Lecküberwachungseinrichtung für einen Flüssigkeitsbehälter bekannt, bei dem in Nähe der Behälterwand ein ringförmiges Rohr mit in Rohrlängsrichtung aufeinanderfolgenden Bohrungen angeordnet ist, durch die im Falle der Leckage Gas von außen in das Rohrinnere gelangen kann.

Ferner ist eine den Gattungsbegriff des Hauptanspruches bestimmende Einrichtung bekannt (Dr. Issel, Karlsruhe), bei der der schlauchförmige Sensorschlauch ebenfalls mit Bohrungen in seiner Wand versehen ist und ein Gasdetektor Anwendung findet. Gasanalysatoren als Detektoren sind ebenfalls bekannt (z. B. Gasanalysatoren der Firma Ados, DE-5100 Aachen und der Drägerwerke, Lübeck). - Diesen mit Bohrungen versehenen Rohren sind Rohre mit porösen Wänden in der Wirkung ähnlich.

Diesem Stand der Technik gegenüber liegt der Erfindung die Aufgabe zu Grunde, eine Einrichtung nach dem Oberbegriff des Hauptanspruches zu schaffen, die einen einfachen Aufbau des Sensors besitzt, gleichwohl aber eine kurzzeitige und sichere Anzeige ermöglicht, ohne daß ein Verstopfen oder Zusetzen von Bohrungen das Meßergebnis beeinflußt. Dies soll mit konstruktiv einfachen Mitteln erreicht werden. - Die Leck- und Überwachungseinrichtung soll außer ihrer vorzugsweisen Anwendung bei Flüssigkeiten auch auf Gase reagieren.

Dem genannten Stand der Technik gegenüber sieht die Erfindung die Merkmale des kennzeichnenden Teils des unabhängigen Patentanspruches 1 vor. - Die Merkmale der abhängigen Patentansprüche dienen der Verbesserung und Weiterbildung der Merkmale des Anspruches 1.

Die Herstellung und Ausbildung des erfindungsgemäßen Sensorschlauches gestaltet sich insofern einfach, als es nur des Anbringens von Kettstichfäden quer durch den Schlauch bedarf. Das gummielastische Material des Schlauches sorgt dafür, daß die Fuß- und Kopfabschnitte der als Dochte wirkenden parallelen Fäden dicht umschlossen werden und so nur die Fäden in einem engbegrenzten, genau erfaßbaren Bereich eine Anzeige bewirken.

Auf der Zeichnung ist ein Ausführungsbeispiel der erfindungsgemäßen Einrichtung und ihrer Anwendungsmöglichkeiten dargestellt bzw. erläutert, und zwar zeigt

Fig. 1 einen Querschnitt durch ein Rohr mit seiner Ummantelung und dem Sensorschlauch,

Fig. 2 einen Längsschnitt,

Fig. 3 einen Querschnitt durch den Schlauch,

Fig. 4 eine Anwendungsmöglichkeit des Sensorschlauches zum Überwachen einer horizontalen Rohrleitung und

Fig. 5 eine Prüfeinrichtung zum Messen zweier Flüssigkeitsschichten.

Fig. 6 und 7 verdeutlichen die Wirkung des Schlauches bei einem Gasleck.

Das eine Flüssigkeit führende Rohr 1 ist auf Leckage zu überwachen. Es ist in üblicher Weise mit einer Schicht 2, hier einer Glaswollepackung umgeben, die ihrerseits von einem Blechmantel 3 umschlossen wird. Unterhalb der Längsachse L des Rohres 1 ist in dem Zwischenraum zwischen diesem und dem Mantel 3 der erfindungsgemäße Sensorschlauch 4 angeordnet, der in der Glaswollepackung angeordnet ist.

Der Sensorschlauch besteht aus einer gummielastischen Hülle, z. B. aus Silikongummi, Fluor-Elastomer od. dgl. und weist im wesentlichen runden Querschnitt auf. Der Innenraum J des Schlauches 4 wird von Fäden 5 diametral durchsetzt. Diese Fäden sind in parallelen Ebenen zueinander angeordnet, die in Schlauchlängsrichtung in gleichmäßigem Abstand aufeinanderfolgen, wie dies die Fäden 5a, 5b, 5c usw. zeigen. Diese Fäden sind multifil und bestehen je nach Erfordernis aus chemikalienfestem sowie gegenüber der Temperatur des in dem Rohr 1 geführten Mediums beständigem Material. Dieses kann Aramid, Polyamid, Polyester oder PTFE sein, ebenso wie der Faden aus Glasfasern bestehen kann. Die Fäden der beschriebenen Fadenschar sind durch Löcher 6 derart geführt, daß sich das Material der elastischen Schlauchwand dicht um die Kopf- und Fußabschnitte 7a, 7b der Fäden 5 legt, so daß ein Eindringen von Gas oder Leckflüssigkeit durch die Löcher nur durch die Kapillarkräfte gegen den in dem Schlauch herrschenden geringen Überdruck möglich ist.

Vorzugsweise werden die Fäden durch einen kontinuierlichen Faden mittels eines Kettstiches von einer Seite des Schlauches zur gegenüberliegenden Seite geführt, so daß jeder der Fäden 5 aus einem Doppelfaden gebildet ist.

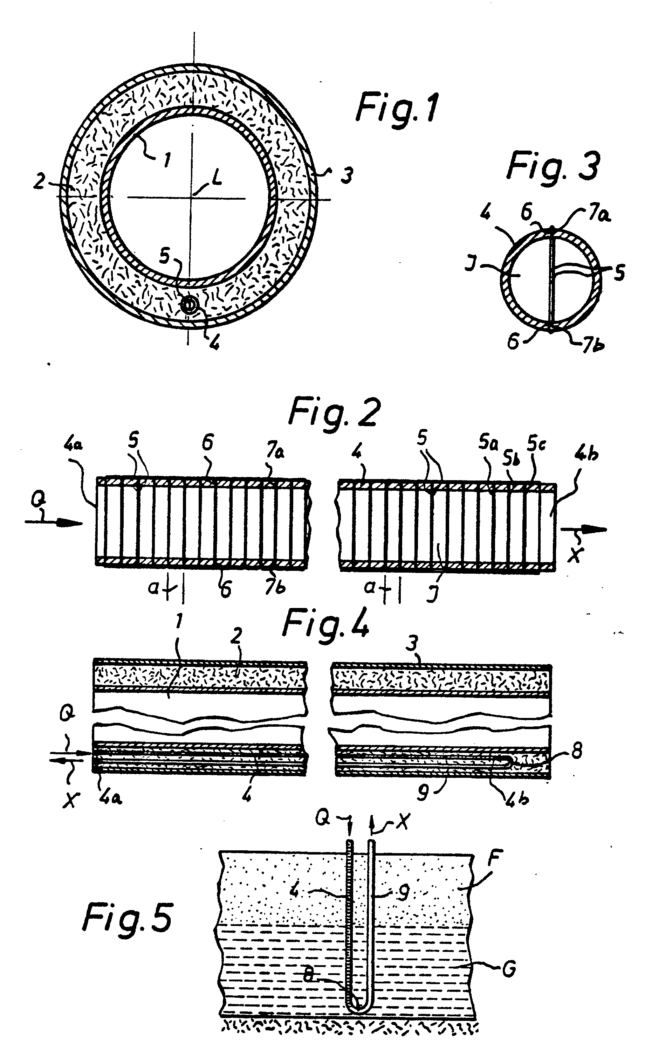

Wie Fig. 2 erkennen läßt, sind die Fäden 5 in geringem Abstand a voneinander hintereinander in Längsrichtung des Schlauches vorgesehen, wobei der Schlauch 4 seine runde Form im wesentlichen beibehält, um hierdurch die wirksame Länge jedes Fadens 5 im Inneren des Schlauches möglichst groß zu halten. Hierdurch und durch die Vielzahl der aufeinander folgenden doppelten Fäden wird der den Schlauch durchströmenden Luft eine große Fläche dargeboten.

Durch den Schlauch wird in Richtung des Pfeiles Q ein neutrales Trägergas z. B. Luft oder Stickstoff mit geringem Druck von etwa 10 bis 30 mm WS geleitet, wozu an dem einen in Fig. 2 und 4 linken) Ende 4a des Schlauches 4 z. B. eine Pumpe als Geber angeordnet ist. Das neutrale Gas kann auch z. B. aus einer Druckluftleitung kommen. Das zweite (in Fig. 2 und 4 rechte) Ende 4b des Schlauches 4 ist an einen Detektor in Form eines Gasanalysegerätes od. dgl. bei X angeschlossen, das auf das in dem Rohr 1 geführte Medium abgestellt ist.

Gelangt in Folge eines Lecks Gas oder Flüssigkeit, insbesondere Flüssigkeit, aus dem Rohr 1 entweder unmittelbar aus dem unteren Abschnitt des Rohres an den Schlauch 4 oder aber bei einem Leck in den Seitenteilen des Rohres durch die Glaswolle der Schicht 2 hindurch an den Schlauch 4, so wird der Schlauch allseitig, insbesondere an seiner Oberseite benetzt. Durch diese Benetzung des Schlauches gelangt Flüssigkeit ausschließlich über die Fäden 5, die als Dochte wirken, in den Innenraum des Schlauches 4. Hier bieten die Fäden 5 eine relativ große Fläche, an der die in dem Schlauch geführte Druckluft vorbeistreicht und die Gasphase des Rohrmediums an den Fäden auf Höhe der Leckstelle zu dem Detektor führt. Bei geeigneter Ausführung der Meßeinrichtung läßt sich eine kurzzeitige und genaue Ermittlung der Leckstelle an dem Rohr unter Berücksichtigung der Länge des Schlauches 4 erreichen.

Die erfindungsgemäße Einrichtung findet vorzugsweise in der Weise Anwendung, daß die Überwachung des Rohres 1 mittels des Schlauches 4 zwischen zwei benachbarten Flanschen des Rohres 1 erfolgt. Hier ist die Druckluftquelle auf Höhe des einen Flansches und der Detektor auf der Höhe des zweiten Flansches bzw. kurz dahinter und davor angeordnet.

Fig. 4 zeigt ein Anwendungsbeispiel bei dem der Sensorschlauch 4 eine Anordnung erfährt, wie sie in Fig. 1 dargestellt ist. Am Ende 4b des Schlauches 4 ist ein fadenloses Schlauchknie 8 angeordnet, das in einen Leitungsschlauch 9 ohne Fäden mündet. Dieser Schlauch kann anderen Querschnitt oder gleichen Querschnitt wie der Sensorschlauch 4 haben. Die Druckluft wird wiederum in Richtung des Pfeiles Q in den Prüfschlauch eingeführt und tritt am Ende 4a über das Knie 8 in den Leitungsschlauch 9 über, so daß der Detektor bei X auf Höhe der Druckluftquelle angeordnet werden kann.

In Fig. 5 ist ein weiteres Anwendungsbeispiel der Einrichtung nach der Erfindung zu erkennen, wobei der Sensorschlauch 4 gleichfalls wieder mit einem Knie 8 versehen ist, das in einen Leitungsschlauch 9 mündet. Der Sensorschlauch und der Leitungsschlauch 9 sind wiederum an eine Druckluftquelle und einen Detektor angeschlossen. Die Anordnung dient der Prüfung auf Vorhandensein zweier unterschiedlicher Flüssigkeiten und der Lage der Trennebene zwischen den Flüssigkeiten. Die beiden Schläuche werden senkrecht in die beiden Flüssigkeiten F und G getaucht. Die Fäden 5 in dem oberen Schlauchabschnitt 10 werden mit der ersten Flüssigkeit F beaufschlagt, während die Fäden 5 des unteren Schlauchabschnitts 11 auf Höhe der zweiten Flüssigkeit G mit dieser getränkt werden. Durch die Messung der Zeitdauer des durch den Schlauch 4 geführten neutralen Gases und dem Zeitpunkt der Anzeige der zweiten Flüssigkeit läßt sich die Höhe der ersten Schicht F ebenso messen wie die Höhe der Schicht 11 als Subtraktionswert der wirksamen Länge des Schlauches und der Höhe der Schicht F.

Auch bei senkrechter Anordnung des Schlauches 4 ist in gleicher Weise dem durchströmenden neutralen Gas eine große Berührungsfläche in Form der dochtartigen Doppelfäden geboten, die an der Durchdringstelle der Fäden durch die Schlauchwandung aufgrund der Elastizität des Schlauchmaterials eng und dicht umschlossen werden.

Die zu überwachende bzw. zu prüfende Flüssigkeit gelangt, wie ausgeführt, unter der Dochtwirkung der Fäden ohne jede Verstopfung von Poren oder Löchern in das Innere des Schlauches 4 und läßt hierdurch eine hohe Meßgenauigkeit erreichen. Vor allem sind die Meßstellen in Form der Doppelfläche genau gleich, da ein konstanter Fadenquerschnitt gegeben ist, der am Eintritts- und Austrittsende des Doppelfadens bei jedem Faden elastisch umschlossen und abgedichtet ist.

Der Sensorschlauch kann von einem flüssigkeitsdurchlässigen Mantel, vorzugsweise in Spiralform, umschlossen sein, wobei die Spirale die Form einer mehrgängigen Wendel hat und aus Stahl besteht.

Einer der Armierungsdrähte der Wendel kann auch als Widerstandsdraht ausgebildet sein und zur Erhöhung der Detektorempfindlichkeit als Sensorheizung verwendet werden, , oder kann mit einem nur in Laugen bzw. nur in Säuren lösbaren, in Wasser jeweils aber unlösbaren Überzug versehen sein.

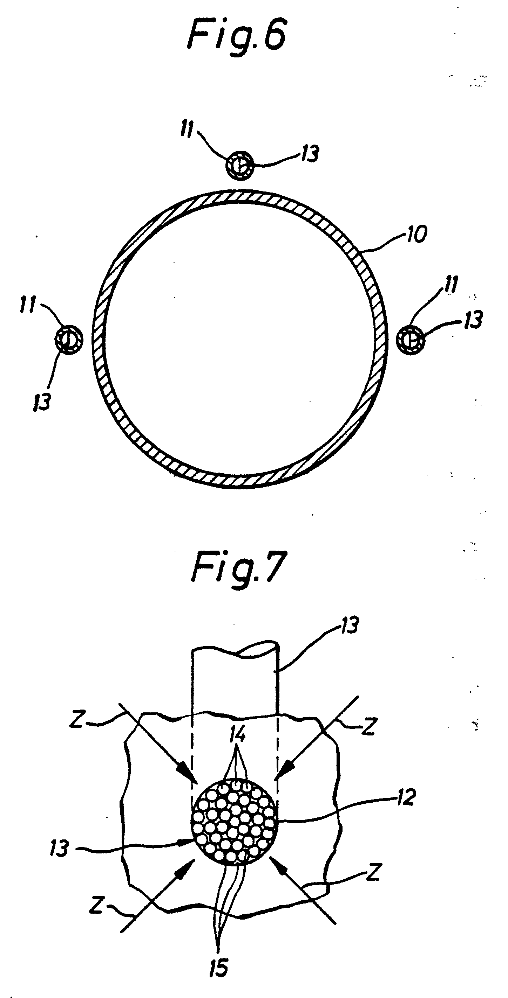

Fig. 6 und 7 zeigen eine beispielhafte Anwendung der Einrichtung nach der Erfindung für eine Überwachungs- und Prüfeinrichtung für Gase. In dem Rohrstrang 10 wird das zu überwachende Gas geführt, wobei der Strang von in Dreiecksform angeordneten Sensorschläuchen 11 umgeben ist. Jede andere geeignet erscheinende Anordnung der Schläuche 11 wie auch deren Abstand zu dem Rohrstrang 10 kann gewählt werden. Die Gasquelle kann ebenfalls jede denkbare sein. - Wiederum wird durch den Sensorschlauch 11 Luft- oder ein zweites geeignetes Gas geführt. Das zu prüfende Gas kann durch die Löcher 12, von denen eins in Fig. 7 in Draufsicht dargestellt ist, in das Schlauchinnere gelangen. Zunächst ist davon auszugehen, daß ohne den Faden 13 sich die das Loch 12 bildende Einstichstelle zusammenzieht und das Loch sich von allen Seiten radial schließt (dgl. hierzu die Pfeile Z in Fig. 7) da das Schlauchmaterial gummielastisch ist. Da der Faden 13 ein saugfähiger Faden, also ein Naturfaserfaden ist (im Gegensatz zu einem nicht saugfähigen extrudierten Kunststoffaden) werden zwischen den Fasern 14 des Fadens 13 gasdurchlässige Abschnitte und Bereiche 15 gebildet, die es dem zu prüfenden Gas ermöglichen, in das Schlauchinnere zu gelangen, ohne daß das Loch 12 selbst verstopft wird oder durch die gummielastische Eigenschaft der Schlauchwand geschlossen wird.

**Patentansprüche**

1. Insbesondere auf Flüssigkeiten reagierende Lecküberwachungs- und Prüfeinrichtung mit einem schlauchförmigen Sensor und einem an dem einen Sensorende angeordneten Geber für ein Trägergas und einem am anderen Sensorende vorhandenen Detektor, dadurch gekennzeichnet, daß der Sensor ein gummielastischer luft- bzw. gasführender Schlauch (4) ist, der Detektor ein Gasanalysator ist und der Schlauch mit in Schlauchlängsrichtung aufeinanderfolgenden und von der Schlauchaußenseite in das Schlauchinnere reichenden, saugfähigen Fäden (5) als Sensorelemente versehen ist.

2. Einrichtung nach Anspruch 1, dadurch gekennzeichnet, daß der Schlauch (4) aus einem chemikalienfesten und/oder temperaturbeständigen Werkstoff besteht.

3. Einrichtung nach Anspruch 2, dadurch gekennzeichnet, daß der Schlauch (4) aus einem Material der Shorehärte zwischen 30 und 100 besteht.

4. Einrichtung nach Anspruch 1 und einem der Ansprüche 2 oder 3, dadurch gekennzeichnet, daß die saugfähigen Fäden (5) sich über den Durchmesser des Schlauches (4) erstrecken und durch diametral gegenüberliegende Löcher (6) des Schlauches (4) geführt sind, wobei die Lochränder die Fadenköpfe (7a) und Fadenfüße (7b) dicht umschließen.

5. Einrichtung nach Anspruch 1 und einem der Ansprüche 2 bis 4, dadurch gekennzeichnet, daß die Fäden (5) durch einen fortlaufenden, nach Art eines Kettstichfadens geführten Faden gebildet sind.

6. Einrichtung nach Anspruch 1 und einem der Ansprüche 2 bis 5, dadurch gekennzeichnet, daß um den Sensorschlauch (4) eine Armierung aus einem chemikalienresistenten Stahl spiralförmig angeordnet ist, die mindestens die Form einer doppelgängigen Wendel hat.

7. Einrichtung nach Anspruch 6, dadurch gekennzeichnet, daß die Stahlspirale als 4-gängige Wendel ausgebildet ist.

8. Einrichtung nach Anspruch 1 und einem der Ansprüche 6 oder 7, dadurch gekennzeichnet, daß einer der Armierungsdrähte der Wendel als Widerstandsdraht ausgebildet ist.

9. Einrichtung nach Anspruch 1 und 8, dadurch gekennzeichnet, daß einer der Armierungsdrähte des Sensorschlauches mit einem nur in Laugen bzw. nur in Säuren lösbaren, in Wasser jeweils aber unlösbaren Überzug versehen ist.

10. Einrichtung nach Anspruch 8, dadurch gekennzeichnet, daß der Widerstandsdraht zur Erhöhung der Detektorempfindlichkeit als Sensorheizung verwendet wird.

**Claims**

1. Leakage monitoring and testing device reacting in particular to liquids, having a tubular sensor and a transmitter for a carrier gas arranged on one end of the sensor, and a detector located on the other end of the sensor, characterised in that the sensor is a rubber-elastic air- or gas-conveying tube (4), the detector is a gas analyser and the tube is provided with absorbent threads (5) as sensor elements following one after the other in the longitudinal direction of the tube and extending from the outside of the tube to the inside of the tube.

2. Device according to claim 1, characterised in that the tube (4) is made of a chemical-resistant and/or temperature-resistant material.

3. Device according to claim 2, characterised in that the tube (4) comprises a material with a shore hardness of between 30 and 100.

4. Device according to claim 1 and one of claims 2 or 3, characterised in that the absorbent threads (5) extend over the diameter of the tube (4) and are guided through diametrically opposite apertures (6) of the tube (4), the aperture edges tightly enclosing the thread tops (7a) and thread bottoms (7b).

5. Device according to claim 1 and one of claims 2 to 4, characterised in that the threads (5) are formed by a continouus thread guided in the manner of a chain stitch thread.

6. Device according to claim 1 and one of claims 2 to 5, characterised in that arranged in a spiral about the sensor tube (4) is a reinforcement of a chemical-resistant steel which has at least the shape of a double helix.

7. Device according to claim 6, characterised in that the steel spiral is constructed as a 4-fold helix.

8. Device according to claim 1 and one of claims 6 or 7, characterised in that one of the reinforcement wires of the coil is constructed as a resistance wire.

9. Device according to claim 1 and 8, characterised in that one of the reinforcement wires of the sensor tube is provided with a coating which is soluble only in alkaline solutions or only in acids, but insoluble in each case in water.

10. Device according to claim 8, characterised in that the resistance wire is used as sensor heating to increase the detector sensitivity.

**Revendications**

1. Dispositif de surveillance et d'essai de fuites, réagissant en particulier à des fluides, comprenant un capteur en forme de tuyau et un émetteur disposé à l'une des extrémités du capteur pour un gaz porteur et un détecteur présent à l'autre extrémité du capteur, caractérisé an ce que le capteur est constitué par un tuyau (4) en caoutchouc élastique, qui transporte de l'air ou un gaz, que le détecteur est un analyseur de gaz et que le tuyau est muni, en tant qu'éléments détecteurs, de fils absorbants (5) se suivant les uns les autres dans la direction longitudinale du tuyau et pénétrant depuis le côté externe du tuyau dans l'intérieur de celui-ci.

2. Dispositif selon la revendication 1, caractérisé en ce que le tuyau (4) est constitué en un matériau résistant aux produits chimiques et/ou résistant à la température.

3. Dispositif selon la revendication 2, caractérisé en ce que le tuyau (4) est constitué en un matériau dont la dureté Shore est conprise entre 30 et 100.

4. Dispositif selon la revendication 1 et l'une des revendications 2 ou 3, caractérisé en ce que les fils absorbants (5) s'étendent sur le diamètre du tuyau (4) et sont passés dans des trous diamétralement opposés (6) du tuyau (4), les bords des trous entourant de façon étanche les têtes (7a) et les pieds (7b) des fils.

5. Dispositif selon la revendication 1 et l'une des revendications 2 à 4, caractérisé en ce que les fils (5) sont constitués par un fil continu guidé à la manière d'un fil de chaînette.

6. Dispositif selon la revendication 1 et l'une des revendications 2 à 5, caractérisé en ce qu'une armature constituée en acier résistant aux produits chimiques est disposée en spirale autour du tuyau capteur (4) en ayant au moins la forme d'une hélice à double filet.

7. Dispositif selon la revendication 6, caractérisé en ce que la spirale en acier est constituée sous forme d'une hélice à quatre filets.

8. Dispositif selon la revendication 1 et l'une des revendications 6 ou 7, caractérisé en ce que l'un des fils d'armature de l'hélice est constitué sous forme d'un fil à résistance.

9. Dispositif selon les revendications 1 et 8, caractérisé en ce que l'un des fils d'armature du tuyau capteur est muni d'un revêtement soluble seulement dans des bases ou seulement dans des acides, mais n'est pas soluble dans l'eau.

10. Dispositif selon la revendication 8, caractérisé en ce que le fil à résistance est utilisé pour augmenter la sensibilité du détecteur pour chauffer le capteur.

Fig.1

Fig. 3

Fig. 2

Fig. 4

Fig. 5

7

# Fig.6

# Fig.7